(19) Europäisches Patentamt / European Patent Office / Office européen des brevets

(11) **EP 4 199 154 B1**

(12) **EUROPEAN PATENT SPECIFICATION**

(45) Date of publication and mention of the grant of the patent:
**12.08.2026 Bulletin 2026/33**

(21) Application number: **21928371.0**

(22) Date of filing: **27.10.2021**

(51) International Patent Classification (IPC):
***H01M 4/62*** *(2006.01)* ***H01M 4/134*** *(2010.01)*
***H01M 4/1395*** *(2010.01)*

(52) Cooperative Patent Classification (CPC):
**H01M 4/62; H01M 4/0404; H01M 4/0471; H01M 4/134; H01M 4/1395; H01M 4/36; H01M 4/364; H01M 4/366; H01M 4/38; H01M 4/386; H01M 4/48; H01M 4/483; H01M 4/485; H01M 4/58; H01M 4/623;** (Cont.)

(86) International application number:
**PCT/CN2021/126778**

(87) International publication number:
**WO 2023/070382 (04.05.2023 Gazette 2023/18)**

(54) **MODIFIED SILICON MATERIAL AND PREPARATION METHOD THEREFOR, AND NEGATIVE ELECTRODE MATERIAL, NEGATIVE ELECTRODE PLATE, SECONDARY BATTERY, BATTERY MODULE, BATTERY PACK AND ELECTRIC APPARATUS**

MODIFIZIERTES SILICIUMMATERIAL UND HERSTELLUNGSVERFAHREN DAFÜR SOWIE NEGATIVELEKTRODENMATERIAL, NEGATIVELEKTRODENPLATTE, SEKUNDÄRBATTERIE, BATTERIEMODUL, BATTERIEPACK UND ELEKTRISCHE VORRICHTUNG

MATÉRIAU DE SILICIUM MODIFIÉ ET SON PROCÉDÉ DE PRÉPARATION, ET MATÉRIAU D'ÉLECTRODE NÉGATIVE, PLAQUE D'ÉLECTRODE NÉGATIVE, BATTERIE SECONDAIRE, MODULE DE BATTERIE, BLOC-BATTERIE ET APPAREIL ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.06.2023 Bulletin 2023/25**

(73) Proprietor: **Contemporary Amperex Technology (Hong Kong) Limited**
**Central, Central And Western District (HK)**

(72) Inventors:
- **GUAN, Yingjie**
  **Ningde, Fujian 352100 (CN)**
- **ZHAO, Yuzhen**
  **Ningde, Fujian 352100 (CN)**
- **MA, Qingyan**
  **Ningde, Fujian 352100 (CN)**
- **WEN, Yan**
  **Ningde, Fujian 352100 (CN)**
- **HUANG, Qisen**
  **Ningde, Fujian 352100 (CN)**
- **ZHAO, Fenggang**
  **Ningde, Fujian 352100 (CN)**

(74) Representative: **Gong, Jinping**
**CocreateIP**
**Neumarkter Straße 21**
**81673 München (DE)**

(56) References cited:
**CN-A- 109 599 551**
**CN-A- 109 671 943**
**CN-A- 110 931 761**
**CN-A- 112 219 295**
**CN-A- 113 270 587**
**CN-A- 113 270 587**
**US-A1- 2016 344 019**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**H01M 4/625; H01M 10/052; H01M 10/0525;**
H01M 2004/021; H01M 2004/027; Y02E 60/10

## Description

### TECHNICAL FIELD

This application relates to the field of lithium battery technologies, and in particular, to a modified silicon material with a core-shell structure as specified in any of claims 1-7, a method for preparing a modified silicon material as specified in claims 8 or 9,, a negative electrode active material as specified in claim 10a negative electrode plate as specified in claim 11, a secondary battery as specified in claim 12, a battery module as specified in claim 13, a battery pack as specified in claim 14, and an electric apparatus as specified in claim 15.

### BACKGROUND

In recent years, with increasingly wide application of lithium-ion batteries, lithium-ion batteries have been widely used in energy storage power supply systems such as hydroelectric power stations, thermal power stations, wind power stations, and solar power stations, and in a number of fields such as electric tools, electric bicycles, electric motorcycles, electric vehicles, military equipment, and aerospace. Along with the tremendous development of lithium-ion batteries, higher requirements are imposed on their energy density, cycling performance, safety performance, and the like.

Silicon materials are commonly used as negative electrode active materials for lithium-ion batteries. However, silicon materials have low gram capacity and poor conductivity, resulting in low first-cycle coulombic efficiency of lithium-ion batteries. In addition, silicon materials are prone to side reactions during battery charging and discharging, resulting in an increase in electrolyte consumption and deterioration of battery cycling performance. At present, fluoride salts or lithium powder are mainly used as raw materials to form a lithium fluoride coating layer on the surface of silicon materials, or asphalt or polymer is used to form a coating layer on the surface of silicon materials, to suppress side reactions. However, the lithium fluoride coating layer in the former method tends to fall off during expansion and contraction of silicon materials, having poor material stability. Further, fluoride salts are highly toxic and lithium powder is flammable, both materials having poor safety. An SEI film formed by a modified silicon material prepared by using the latter method contains a high proportion of organic components and therefore has poor conductivity.

Therefore, at present, a modified silicon material with high gram capacity and sound conductivity is urgently needed to improve first-cycle coulombic efficiency and cycling performance of lithium-ion batteries.

CN 109 671 943 A discloses a negative electrode material comprising particles with a silicon core and a core-shell structure.

### SUMMARY

In view of the above-described problems in the prior art, this application provides a modified silicon material with a core-shell structure, a method for preparing a modified material, a negative electrode active material, a negative electrode plate, a secondary battery, a battery module, a battery pack, and an electric apparatus as specified in the claim set, to resolve the problems of low gram capacity and poor conductivity of silicon materials, as well as the problems of low first-cycle coulombic efficiency and a low cycling capacity retention rate of batteries.

In order to achieve the objective, a first aspect of this application provides a modified silicon material with a core-shell structure, including an inner core, a first coating layer that wraps the inner core, and a second coating layer that wraps the first coating layer, where the inner core is elemental silicon and/or a silicon alloy; the first coating layer includes a silicon-oxygen compound; the second coating layer includes lithium fluoride, lithium carbonate, and carbon; and a weight ratio of element lithium to element carbon in the modified silicon material is 6% to 52%, and optionally, 6.5% to 50%; wherein a particle size Dv50 of the modified silicon material is 1 μm to 3.5 μm;

wherein the modified silicon material contains 0.1% to 3% , and optionally, 0.2% to 2% element fluorine by weight;
wherein the modified silicon material contains 0.2% to 3% element carbon by weight;
wherein a quantity of pores in a single particle of the modified silicon material is less than 10, and said pore diameter of the pore is not less than 50 nm,
wherein the particle size Dv50 and the quantity of pores are measured according to the description.

Therefore, the modified silicon material of this application has high gram capacity, sound conductivity, high compacted density, sound electrolyte wettability, a low volume expansion rate, and fewer side reactions when used in batteries. A battery prepared from the modified silicon material of this application has high energy density, high first-cycle coulombic efficiency, and a high cycling capacity retention rate.

In any implementation, the second coating layer further includes lithium hydroxide. Therefore, the modified silicon material has high gram capacity, sound conductivity, high compacted density, sound electrolyte wettability, a low

volume expansion rate, and fewer side reactions when used in batteries. A battery prepared from the modified silicon material of this application has high energy density, high first-cycle coulombic efficiency, and a high cycling capacity retention rate.

In any implementation, the silicon-oxygen compound is $SiO_x$, where $0<x<2$, and optionally, $0.3\leq x\leq 1.5$. Therefore, the volume expansion rate of the modified silicon material is reduced, and fewer side reactions occur when the silicon material is applied to a battery.

In any implementation, the second coating layer includes:

0.1% to 2.9% (optionally 0.27% to 2.73%) lithium fluoride;
0.005% to 3.8% (optionally 0.01% to 3.5%) lithium carbonate;
0.15% to 3% (optionally 0.3% to 2.8%) carbon; and
0% to 0.07% (optionally 0% to 0.06%) lithium hydroxide.

Therefore, the volume expansion rate of the modified silicon material is further reduced; gram capacity, conductivity, and electrolyte wettability of the modified silicon material are further improved; fewer side reactions occur when the modified silicon material is applied to a battery; and energy density, first-cycle coulombic efficiency, and a cycling capacity retention rate of the battery prepared from the modified silicon material of this application are improved.

In any implementation, a particle size $D_v50$ of the modified silicon material is 1 $\mu$m to 3.5 $\mu$m, and optionally, 1.1 $\mu$m to 3 $\mu$m. If the particle size is too large, lithium precipitation is likely to occur during a charge and discharge cycle of the battery, and particles of the modified silicon material are likely to lose electrical contact with a current collector, causing a decrease in first-cycle coulombic efficiency and deterioration of cycling performance of the battery. If the particle size is too small, there are excessive electrochemical reaction sites for forming an SEI film in the modified silicon material, causing a decrease in the first-cycle coulombic efficiency of the battery. Further, compacted density of the modified silicon material and electrolyte wettability are decreased, thereby deteriorating the cycling performance of the battery. Therefore, this application improves compacted density and electrolyte wettability of the modified silicon material, reduces the volume expansion rate of the modified silicon material, alleviates lithium precipitation of the modified silicon material during the charge and discharge cycle of the battery, maintains electrical contact between the particles of the modified silicon material and the current collector, and therefore improves first-cycle coulombic efficiency and the cycling capacity retention rate of the battery.

In any implementation, a specific surface area of the modified silicon material is 5.5 $m^2/g$ to 14 $m^2/g$, and optionally, 6 $m^2/g$ to 13 $m^2/g$. This enables the modified silicon material to have a suitable quantity of reactive active sites, further reducing side reactions when the modified silicon material is used in a battery, and further improving cycling performance of the battery.

In any implementation, a quantity of pores in a single particle of the modified silicon material is less than 10, for example, 0, 1, 2, 3, 4, 5, 7, or 9, and a pore diameter of the pore is not less than 50 nm. Therefore, side reactions at a porous interface of the modified silicon material are reduced, and electrolyte wettability of the modified silicon material is improved, and therefore, first-cycle coulombic efficiency and cycling performance of the battery are improved.

In any implementation, the modified silicon material contains 0.1% to 3%, and optionally, 0.2% to 2% element fluorine by weight. Therefore, conductivity of the modified silicon material is further improved, resistance of the material surface is reduced, and side reactions of the modified silicon material during the charge and discharge cycle of the battery are reduced, and therefore, first-cycle coulombic efficiency and cycling performance of the battery are further improved.

In any implementation, the modified silicon material contains 0.2% to 3%, and optionally, 0.3% to 2.8% element carbon by weight. Therefore, gram capacity and conductivity of the modified silicon material are further improved, the volume expansion rate and side reactions of the modified silicon material are further reduced, and first-cycle coulombic efficiency and cycling performance of the battery are further improved.

In any implementation, the silicon alloy is selected from at least one of a ferrosilicon alloy, a silicon aluminum alloy, a silicon manganese alloy, a silicon tin alloy, and a silicon germanium alloy. The silicon alloy can further reduce the volume expansion rate of the modified silicon material, thereby improving first-cycle coulombic efficiency and cycling performance of the battery.

In any implementation, thickness of the first coating layer is 1 nm to 8 nm, for example, 2 nm, 3 nm, or 4 nm. In this way, the volume expansion rate of the modified silicon material is further reduced, fewer side reactions occur when the modified silicon material is used in a battery, and sufficient conductivity is ensured.

In any implementation, thickness of the second coating layer is 5 nm to 45 nm, and optionally, 7 nm to 43 nm. In this way, gram capacity and conductivity of the modified silicon material are improved, electrolyte wettability of the modified silicon material is improved, and therefore, first-cycle coulombic efficiency is improved and cycle capacity of the battery is maintained.

A second aspect of this application provides a method for preparing a modified silicon material, the method including the following steps:

(1) heat-treating an inner core in an oxygen-containing atmosphere to obtain a pretreatment, where the inner core is elemental silicon and/or a silicon alloy;
(2) mixing the pretreatment, PVDF, a lithium-containing compound, and a solvent, where the lithium-containing compound is lithium carbonate and/or lithium hydroxide; and
(3) subjecting the mixture to drying, roasting, cooling, crushing, and sieving in sequence to obtain a modified silicon material.

Therefore, the modified silicon material prepared by using the method of this application has high gram capacity, sound conductivity, high compacted density, sound electrolyte wettability, a low volume expansion rate, and fewer side reactions when used in batteries. A battery prepared from the material has high energy density, high first-cycle coulombic efficiency, and a high cycling capacity retention rate.
In any implementation, in step (1), the heat treating is performed at 200°C to 400°C for 0.5 to 3 hours. The outer layer of the obtained pretreatment is a silicon-oxygen compound.
In any implementation, in step (3), the roasting is performed in an inert atmosphere at a temperature of 800°C to 1000°C, and optionally, for a duration of 3 to 5 hours.
Therefore, the modified silicon material prepared by using the method of this application has high gram capacity, sound conductivity, high compacted density, sound electrolyte wettability, a low volume expansion rate, and fewer side reactions when used in batteries. A battery prepared from the modified silicon material has high energy density, high first-cycle coulombic efficiency, and a high cycling capacity retention rate.
In any implementation, in step (3), the dried material is preheated at 300°C to 500°C for 1 to 2 hours before the roasting.
In any implementation, in step (2), a weight ratio of the PVDF, the lithium-containing compound, and the pretreatment is 1:(0.1-2):(13-155).
In any implementation, the negative electrode active material of the first aspect of this application is prepared by using the method of the second aspect of this application.
A third aspect of this application relates to a negative electrode active material, which is the modified silicon material of the first aspect of this application or the modified silicon material prepared by using the method of the second aspect of this application.
A fourth aspect of this application relates to a negative electrode plate including the negative electrode active material of the third aspect of this application.
A fifth aspect of this application provides a secondary battery including the negative electrode plate of the fourth aspect of this application.
A sixth aspect of this application provides a battery module including the secondary battery of the fifth aspect of this application.
A seventh aspect of this application provides a battery pack including the battery module of the sixth aspect of this application.
An eighth aspect of this application provides an electric apparatus including at least one of the secondary battery of the fifth aspect of this application, the battery module of the sixth aspect of this application, or the battery pack of the seventh aspect of this application.
This application has achieved the following beneficial effects.
The modified silicon material of this application has high gram capacity, sound conductivity, high compacted density, sound electrolyte wettability, and a low volume expansion rate; and fewer side reactions occur when the modified silicon material is applied to batteries. A battery prepared from the modified silicon material of this application has high energy density, high first-cycle coulombic efficiency, and a high cycling capacity retention rate.

## BRIEF DESCRIPTION OF DRAWINGS

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application;
FIG. 7 is a diagram of an attenuated total reflectance-Fourier transform infrared spectroscopy of a pretreatment in Example 1; and

FIG. 8 is an XRD pattern of a negative electrode active material in Example 1.

Reference signs:
1. battery pack; 2. upper box body; 3. lower box body; 4. battery module; 5. secondary battery; 51. housing; 52. electrode assembly; 53 cover plate.

## DETAILED DESCRIPTION OF THE EMBODIMENTS

The following specifically discloses in detail, with reference to the accompanying drawings, implementations of a modified silicon material, a method for preparing a modified silicon material, a negative electrode active material, a negative electrode plate, a secondary battery, a battery module, a battery pack, and an electric apparatus of this application. However, unnecessary detailed descriptions may be omitted. For example, detailed descriptions of a well-known matter or overlapping descriptions of an actual identical structure has been omitted. This is to avoid unnecessary cumbersomeness of the following descriptions, so as to facilitate understanding by persons skilled in the art. In addition, accompanying drawings and the following descriptions are provided for persons skilled in the art to fully understand this application and are not intended to limit the subject described in the claims.

"Ranges" disclosed in this application are defined in the form of lower and upper limits, given ranges are defined by selecting lower and upper limits, and the selected lower and upper limits define boundaries of special ranges. Ranges defined in the method may or may not include end values, and any combination may be used, that is, any lower limit may be combined with any upper limit to form a range. For example, if ranges of 60 to 120 and 80 to 110 are provided for a specific parameter, it should be understood that ranges of 60 to 110 and 80 to 120 are also expectable. In addition, if minimum values of a range are set to 1 and 2, and maximum values of the range are set to 3, 4, and 5, the following ranges are all expectable: 1 to 3, 1 to 4, 1 to 5, 2 to 3, 2 to 4, and 2 to 5. In this application, unless otherwise stated, a value range of "a to b" represents an abbreviated representation of any combination of real numbers between a and b, where both a and b are real numbers. For example, a value range of "0 to 5" means that all real numbers from "0 to 5" are listed herein, and "0-5" is just an abbreviated representation of a combination of these values. In addition, when a parameter is expressed as an integer greater than or equal to 2, this is equivalent to disclosure that the parameter is, for example, an integer: 2, 3, 4, 5, 6, 7, 8, 9, 10, 11, 12, or the like.

Unless otherwise specified, all the embodiments and optional embodiments of this application can be mutually combined to form a new technical solution.

Unless otherwise specified, all the technical features and optional technical features of this application can be mutually combined to form a new technical solution.

Unless otherwise specified, all the steps in this application can be performed sequentially or randomly, and optionally, are performed sequentially. For example, a method includes steps (a) and (b), which indicates that the method may include steps (a) and (b) performed in sequence, or may include steps (b) and (a) performed in sequence. For example, the foregoing method may further include step (c), which indicates that step (c) may be added to the method in any order, for example, the method may include steps (a), (b), and (c), steps (a), (c), and (b), steps (c), (a), and (b), or the like.

Unless otherwise specified, "include" and "contain" mentioned in this application is inclusive or may be exclusive. For example, terms "include" and "contain" can mean that other unlisted components may also be included or contained, or only listed components may be included or contained.

Unless otherwise specified, in this application, the term "or" is inclusive. For example, a phrase "A or B" means "A, B, or both A and B". More specifically, any of the following conditions satisfies the condition "A or B": A is true (or present) and B is false (or not present); A is false (or not present) and B is true (or present); or both A and B are true (or present).

[Secondary battery]

A secondary battery is also referred to as a rechargeable battery or an accumulator and is a battery that can be charged after being discharged to activate active materials for continuous use.

Usually, the secondary battery includes a positive electrode plate, a negative electrode plate, a separator, and an electrolyte. During charging and discharging of the battery, active ions (such as lithium ions) are intercalated and deintercalated back and forth between the positive electrode plate and the negative electrode plate. The separator is disposed between the positive electrode plate and the negative electrode plate to mainly prevent a short circuit between positive and negative electrodes and to allow the active ions to pass through. The electrolyte mainly conducts the active ions between the positive electrode plate and the negative electrode plate.

**Modified silicon material with a core-shell structure**

An implementation of this application provides a modified silicon material with a core-shell structure, including an inner core, a first coating layer that wraps the inner core, and a second coating layer that wraps the first coating layer, where the inner core is elemental silicon and/or a silicon alloy; the first coating layer includes a silicon-oxygen compound; the second coating layer includes lithium fluoride, lithium carbonate, and carbon; and a weight ratio of element lithium to element carbon in the modified silicon material is 6% to 52%, and optionally, 6.5% to 50%, for example, 7%, 10%, 15%, 18%, 20%, 23%, 25%, 27%, 30%, 35%, 40%, 45%, or 50%.

Although a mechanism is still unclear, the applicant unexpectedly found that the modified silicon material of this application has high gram capacity, sound conductivity, high compacted density, sound electrolyte wettability, and a low volume expansion rate; and fewer side reactions occur in a charge and discharge cycle of a battery using the modified silicon material. A battery prepared from the modified silicon material of this application has high energy density, high first-cycle coulombic efficiency, and a high cycling capacity retention rate.

In some implementations, the second coating layer further includes lithium hydroxide. Therefore, the modified silicon material has high gram capacity, sound conductivity, high compacted density, sound electrolyte wettability, a low volume expansion rate, and fewer side reactions when used in batteries. A battery prepared from the modified silicon material of this application has high energy density, high first-cycle coulombic efficiency, and a high cycling capacity retention rate.

In some implementations, the silicon-oxygen compound is $SiO_x$, where $0<x<2$, optionally $0.3\leq x\leq 1.5$, and further optionally $0.5\leq x\leq 1$. Therefore, the volume expansion rate of the modified silicon material is reduced, and fewer side reactions occur when the silicon material is applied to a battery.

In some implementations, the second coating layer includes:

0.1% to 2.9% (optionally 0.27% to 2.73%, for example, 0.2%, 0.3%, 0.5%, 0.7%, 1%, 1.1%, 1.3%, 1.4%, 1.7%, 2%, or 2.5%) lithium fluoride;
0.005% to 3.8% (optionally 0.01% to 3.5%, for example, 0.1%, 0.15%, 0.2%, 0.25%, 0.26%, 0.3%, 0.35%, 0.4%, 0.5%, 1%, 2%, or 3%) lithium carbonate;
0.15% to 3% (optionally 0.3% to 2.8%, for example, 0.2%, 0.5%, 1%, 1.2%, 1.6%, 1.7%, 2%, 2.5%, 2.9%) carbon; and
0% to 0.07% (optionally 0% to 0.06%, for example, 0.04%) lithium hydroxide.

The volume expansion rate of the modified silicon material of this application is further reduced; gram capacity, conductivity, and electrolyte wettability of the modified silicon material are further improved; fewer side reactions occur when the modified silicon material is applied to a battery; and energy density, first-cycle coulombic efficiency, and a cycling capacity retention rate of the battery prepared from the modified silicon material of this application are improved.

In some implementations, a particle size $D_v50$ of the modified silicon material is 1 μm to 3.5 μm, and optionally, 1.1 μm to 3 μm, for example, 1.1 μm, 1.3 μm, 1.7 μm, 2.1 μm, or 3 μm. If the particle size is too large, lithium precipitation is likely to occur during a charge and discharge cycle of the battery, and particles of the modified silicon material are likely to lose electrical contact with a current collector, causing a decrease in first-cycle coulombic efficiency and deterioration of cycling performance of the battery. If the particle size is too small, there are excessive electrochemical reaction sites for forming an SEI film in the modified silicon material, causing a decrease in the first-cycle coulombic efficiency of the battery. Further, compacted density of the modified silicon material and electrolyte wettability are decreased, thereby deteriorating the cycling performance of the battery. Therefore, this application improves compacted density and electrolyte wettability of the modified silicon material, reduces the volume expansion rate of the modified silicon material, alleviates lithium precipitation of the modified silicon material during the charge and discharge cycle of the battery, maintains electrical contact between the particles of the modified silicon material and the current collector, and therefore improves first-cycle coulombic efficiency and the cycling capacity retention rate of the battery.

In some implementations, a specific surface area of the modified silicon material is 5.5 $m^2/g$ to 14 $m^2/g$, and optionally, 6 $m^2/g$ to 13 $m^2/g$, for example, 6 $m^2/g$, 6.5 $m^2/g$, 7.2 $m^2/g$, 8 $m^2/g$, 8.3 $m^2/g$, 8.7 $m^2/g$, 9 $m^2/g$, 9.5 $m^2/g$, 10 $m^2/g$, 10.5 $m^2/g$, 12 $m^2/g$, or 13 $m^2/g$. This enables the modified silicon material to have a suitable quantity of reactive active sites, further reducing side reactions when the modified silicon material is used in a battery, and further improving cycling performance of the battery.

In some implementations, a quantity of pores in a single particle of the modified silicon material is less than 10, for example, 0, 1, 2, 3, 4, 5, 7, or 9, and a pore diameter of the pore is not less than 50 nm. Therefore, side reactions at a porous interface of the modified silicon material are reduced, and electrolyte wettability of the modified silicon material is improved, and therefore, first-cycle coulombic efficiency and cycling performance of the battery are improved.

In some implementations, the modified silicon material contains 0.1% to 3%, and optionally, 0.2% to 2%, for example, 0.2%, 0.3%, 0.4%, 0.5%, 0.6%, 0.7%, 0.8%, 0.90%, 0.92%, 1%, 1.3%, 2%, or 2.5% element fluorine by weight. Therefore, conductivity of the modified silicon material is further improved, resistance of the material surface is reduced,

and side reactions of the modified silicon material during the charge and discharge cycle of the battery are reduced, and therefore, first-cycle coulombic efficiency and cycling performance of the battery are further improved.

In some implementations, the modified silicon material contains 0.2% to 3%, and optionally, 0.3% to 2.8%, for example, 0.3%, 0.5%, 0.8%, 0.9%, 1%, 1.2%, 1.4%, 1.5%, 1.6%, 1.9%, 2.1%, 2.3%, 2.8%, or 3% element carbon by weight. Therefore, gram capacity and conductivity of the modified silicon material are further improved, the volume expansion rate and side reactions of the modified silicon material are further reduced, and first-cycle coulombic efficiency and cycling performance of the battery are further improved.

In some implementations, the silicon alloy is selected from at least one of a ferrosilicon alloy, a silicon aluminum alloy, a silicon manganese alloy, a silicon tin alloy, and a silicon germanium alloy. The silicon alloy can further reduce the volume expansion rate of the modified silicon material, thereby improving first-cycle coulombic efficiency and cycling performance of the battery.

In some implementations, thickness of the first coating layer is 1 nm to 8 nm, for example, 2 nm, 3 nm, or 4 nm. In this way, the volume expansion rate of the modified silicon material is further reduced, fewer side reactions occur when the modified silicon material is used in a battery, and sufficient conductivity is ensured.

In some implementations, thickness of the second coating layer is 5 nm to 45 nm, and optionally, 7 nm to 43 nm, for example, 10 nm, 12 nm, 15 nm, 18 nm, 20 nm, 23 nm, 25 nm, 28 nm, 30 nm, 33 nm, 36 nm, 38 nm, 40 nm, 43 nm, or 45 nm. In this way, gram capacity and conductivity of the modified silicon material are improved, electrolyte wettability of the modified silicon material is improved, and therefore, first-cycle coulombic efficiency is improved and cycle capacity of the battery is maintained.

In some implementations, a particle size $D_v50$ of the inner core is 0.5 um to 3 μm, for example, 0.9 μm, 1.1 μm, 1.5 μm, 1.9 μm, 2.3 μm, or 2.6 μm.

**Method for preparing a modified silicon material**

An implementation of this application provides a method for preparing a modified silicon material, the method including the following steps:

(1) heat-treating an inner core in an oxygen-containing atmosphere to obtain a pretreatment, where the inner core is elemental silicon and/or a silicon alloy;
(2) mixing the pretreatment, PVDF, a lithium-containing compound, and a solvent, where the lithium-containing compound is lithium carbonate and/or lithium hydroxide; and
(3) subjecting the mixture to drying, roasting, cooling, crushing, and sieving in sequence to obtain a modified silicon material.

Therefore, the modified silicon material prepared by using the method of this application has high gram capacity, sound conductivity, high compacted density, sound electrolyte wettability, a low volume expansion rate, and fewer side reactions when used in batteries. A battery prepared from the material has high energy density, high first-cycle coulombic efficiency, and a high cycling capacity retention rate.

In some implementations, in step (1), the heat treating is performed at 200°C to 400°C (for example, 300°C) for 0.5 to 3 hours (for example, 1 hour). The outer layer of the obtained pretreatment is a silicon-oxygen compound.

In some implementations, in step (3), the roasting is performed in an inert atmosphere at a temperature of 800°C to 1000°C (for example, 900°C), and optionally, for a duration of 3 to 5 hours, for example, 4 hours.

In some implementations, in step (3), the dried material is preheated at 300°C to 500°C (for example, 400°C) for 1 to 2 hours (for example, 2 hours) before the roasting, and optionally, preheated in an inert atmosphere.

In some implementations, in step (3), the drying is performed at 100°C to 200°C (for example, 150°C) for 6 to 10 hours (for example, 8 hours), optionally, under reduced pressure.

In some implementations, in step (2), a weight ratio of the PVDF, the lithium-containing compound, and the pretreatment is 1:(0.1-2):(13-155), and optionally, 1:(0.174-1.9):(15-150), for example, 1:1.21:150, 1:1.213:50, 1:1.212:30, 1:1.212:21.4, 1:1.212:15, 1:1.818:30, 1:0.786:30, or 1:0.174:30.

In some implementations, the particle size $D_v50$ of the inner core is 0.5 μm to 2 μm, for example, 1.5 μm.

In some implementations, the oxygen-containing atmosphere is an air atmosphere.

In some implementations, the solvent is an organic solvent, and is optionally N-methylpyrrolidone.

A negative electrode active material is provided, which is the above-described modified silicon material of this application or a modified silicon material prepared by using the above-described method of this application.

[Positive electrode plate]

The positive electrode plate usually includes a positive electrode current collector and a positive electrode film

layer disposed on at least one surface of the positive electrode current collector, and the positive electrode film layer includes a positive electrode active material.

In an example, the positive electrode current collector includes two back-to-back surfaces in a thickness direction of the positive electrode current collector, and the positive electrode film layer is disposed on either or both of the two back-to-back surfaces of the positive electrode current collector.

In some embodiments, the positive electrode current collector may use a metal foil or a composite current collector. For example, as the metal foil, an aluminum foil may be used. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some implementations, the positive electrode active material may use a positive electrode active material for batteries known in the art. In an example, the positive electrode active material may include at least one of the following materials: olivine-structured lithium-containing phosphate, lithium transition metal oxide, and respective modified compounds thereof. However, this application is not limited to these materials, and may also use other conventional materials that can be used as the positive electrode active material of the battery. One type of these positive electrode active materials may be used alone, or two or more types may be used in combination. An example of the lithium transition metal oxide may include but is not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (also NCM333 for short), $LiNi_{0.5}Co_{0.2}Mn_{0.3}O_2$ (also NCM523 for short), $LiNi_{0.5}Co_{0.25}Mn_{0.25}O_2$ (also NCM211 for short), $LiNi_{0.6}Co_{0.2}Mn_{0.2}O_2$ (also NCM622 for short), and $LiNi_{0.8}Co_{0.1}Mn_{0.1}O_2$ (also NCM811 for short)), lithium nickel cobalt aluminum oxide (for example, $LiNi_{0.85}Co_{0.15}Al_{0.05}O_2$), and modified compounds thereof. An example of the olivine-structured lithium-containing phosphate may include but is not limited to at least one of lithium iron phosphate (for example, $LiFePO_4$ (also LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.

In some embodiments, the positive electrode film layer further optionally includes a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. In an example, the conductive agent may include at least one of superconducting carbon, acetylene black, carbon black, Ketjen black, carbon dots, carbon nanotubes, graphene, and carbon nanofibers.

In some implementations, the positive electrode plate may be prepared in the following manners: the constituents used for preparing the positive electrode plate, such as the positive electrode active material, the conductive agent, the binder, and any other constituent were dissolved in a solvent (for example, N-methylpyrrolidone) to form a positive electrode slurry. The positive electrode slurry was applied to the positive electrode current collector, and processes such as drying and cold pressing were performed to obtain the positive electrode plate.

[Negative electrode plate]

The negative electrode plate includes a negative electrode current collector and a negative film layer disposed on at least one surface of the negative electrode current collector. The negative film layer includes a negative electrode active material, and the negative electrode active material includes the modified silicon material of this application or a modified silicon material prepared by using the above-described method of this application.

In an example, the negative electrode current collector includes two back-to-back surfaces in a thickness direction of the negative electrode current collector, and the negative film layer is disposed on either or both of the two back-to-back surfaces of the negative electrode current collector.

In some implementations, the negative electrode current collector may use a metal foil or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode current collector may use a metal foil or a composite current collector. For example, as the metal foil, a copper foil may be used. The composite current collector may include a polymer material matrix and a metal layer formed on at least one surface of the polymer material matrix. The composite current

collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some implementations, the negative electrode active material is the above-described negative electrode active material of this application.

In some embodiments, the negative film layer further optionally includes a binder. In an example, the binder may include at least one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative film layer further optionally includes a conductive agent. In an example, the conductive agent may include at least one of superconducting carbon, acetylene black, carbon black, Ketjen black, carbon dots, carbon nanotubes, graphene, and carbon nanofibers.

In some implementations, the negative film layer may optionally include other additives, such as a thickener (such as sodium carboxymethyl cellulose (CMC-Na)).

In some embodiments, the negative electrode plate may be prepared in the following manners: the constituents used for preparing the negative electrode plate, such as the negative electrode active material, the conductive agent, the binder, and any other constituent are dissolved in a solvent (for example, deionized water) to form a negative electrode slurry. The negative electrode slurry is applied to the negative electrode current collector, and processes such as drying and cold pressing are performed to obtain the negative electrode plate.

[Electrolyte]

The electrolyte conducts ions between the positive electrode plate and the negative electrode plate. The electrolyte is not limited to any specific type in this application, and may be selected as required. For example, the electrolyte may be in a liquid state, a gel state, or an all-solid state.

In some implementations, the electrolyte is liquid and includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonat, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-gamma-butyrolactone, sulfolane, methyl sulfonyl methane, ethyl methanesulfonate, and diethyl sulfone.

In some implementations, the electrolyte may optionally include an additive. As an example, the additives may include a negative electrode film forming additive, a positive electrode film forming additive, and may further include additives that can improve certain performance of the battery, such as an additive that improves overcharge performance of the battery, and an additive that improves battery performance at a high temperature or low temperature.

[Separator]

In some embodiments, the secondary battery further includes a separator. The separator is not limited to any specific type in this application, and may be any well-known porous separator with good chemical stability and mechanical stability.

In some implementations, materials of the separator may be selected from at least one of glass fiber, a non-woven fabric, polyethylene, polypropylene, and polyvinylidene fluoride. The separator may be a single-layer thin film or a multi-layer composite thin film, which is not particularly limited. When the separator is a multi-layer composite thin film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, which may be polypropylene, polybutylene terephthalate, polybutylene succinate, or the like.

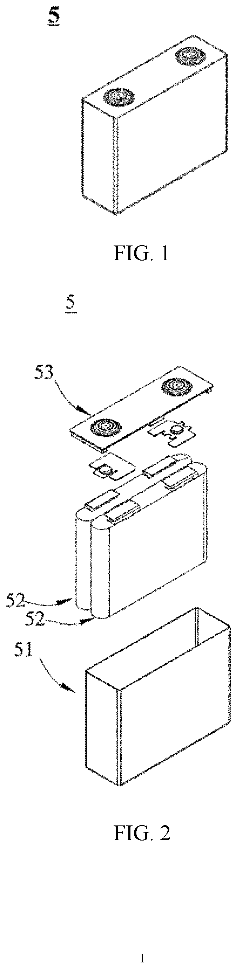

A shape of the secondary battery is not particularly limited in this application, which may be a cylindrical shape, a

rectangular shape, or any other shape. For example, FIG. 1 shows an example secondary battery 5 of a rectangular structure.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. A positive electrode plate, a negative electrode plate, and a separator may form an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, secondary batteries may be assembled into a battery module, and the battery module may include one or more secondary batteries. A specific quantity may be chosen by persons skilled in the art based on use and capacity of the battery module.

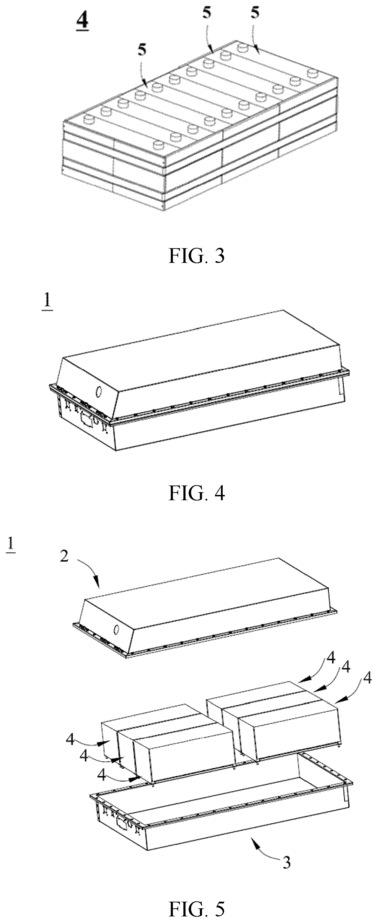

FIG. 3 shows an example battery module 4. Referring to FIG. 3, in the battery module 4, a plurality of secondary batteries 5 may be sequentially arranged along a length direction of the battery module 4. Certainly, the plurality of secondary batteries 5 may alternatively be arranged in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

In some implementations, the battery module may be assembled into a battery pack, which may include one or more battery modules. A specific quantity may be chosen by persons skilled in the art based on use and capacity of the battery pack.

FIG. 4 and FIG. 5 show an example battery pack 1. Referring to FIG. 4 and FIG. 5, the battery pack 1 may include a battery box and a plurality of battery modules 4 disposed in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus, where the electric apparatus includes at least one of the secondary battery, the battery module, or the battery pack provided in this application. The secondary battery, the battery module, or the battery pack may be used as a power source for the electric apparatus or used as an energy storage unit for the electric apparatus. The electric apparatuses may include but is not limited to mobile devices (such as a mobile phone and a notebook computer), electric vehicles (such as a battery electric vehicle, a hybrid electric vehicle, a plug-in hybrid electric vehicle, an electric bicycle, an electric scooter, an electric golf vehicle, and an electric truck), an electric train, a ship, a satellite, and an energy storage system.

A secondary battery, a battery module, or a battery pack may be selected for the electric apparatus based on requirements for using the electric apparatus.

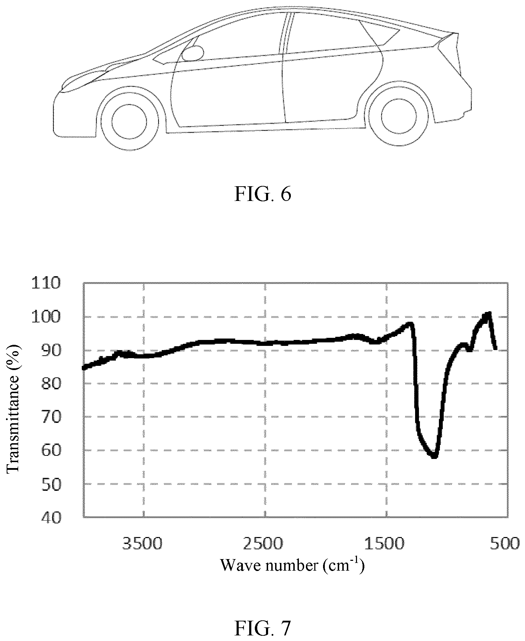

FIG. 6 show an example electric apparatus. The electric apparatus is a battery electric vehicle, a hybrid electric vehicle, a plug-in hybrid electric vehicle, or the like. A battery pack or a battery module may be used to meet requirements of the electric apparatus for high power and high energy density of the secondary battery.

[Example]

The following describes examples in this application. The examples described below are exemplary and only used to explain this application, but cannot be understood as a limitation on this application. Examples whose technical solutions or conditions are not specified are made based on technical solutions or conditions described in documents in the art, or made based on the product specification. The reagents or instruments used are all conventional products that can be purchased on the market if no manufacturer is indicated.

A median particle size by volume $D_v50$ in this application is measured by a laser particle size analyzer (for example, the Mastersizer 2000E laser particle size analyzer produced by Malvern Panalytical Ltd., UK) with reference to GB/T 19077-2016 "Particle Size Analysis-Laser Diffraction Method".

Example 1

(1) An elemental silicon was ground, by a jet mill, into silicon particles with a particle size $D_v50$ of 1.5 $\mu$m; and the silicon particles were heated to 300°C in an air atmosphere and the temperature was kept for 1 hour to obtain a pretreatment 1.

(2) 1 g of PVDF powder, 1.21 g of lithium carbonate, and 150 mL of NMP solvent were mixed; 150 g of pretreatment 1 was added and stirred evenly; the mixture was dried under a condition of -80 kPa and 150 °C for 8 hours; then the mixture was put into a high temperature heat treatment furnace to be preheated at 400°C for 2 hours in an inert atmosphere and then was sintered at 900°C for 4 hours for reaction; cooled to a room temperature; and subjected to mechanical crushing and sieving to obtain a negative electrode active material with a particle size $D_v50$ of 1.7 μm.

Examples 2 to 13 and Comparative examples 1 to 9

Examples 2 to 13 and Comparative examples 1 to 9 are similar to the method for preparing a negative electrode active material in Example 1. Table 1 lists differentiated parameters in Examples 1 to 13 and Comparative examples 1 to 9, while other parameters and operations are the same.

**Table 1 Differentiated parameters of Examples 1 to 13 and Comparative examples 1 to 9**

| | Step (1) | | | Step (2) | | | | Negative electrode active material Dv50 (μm) |
|---|---|---|---|---|---|---|---|---|
| | Inner core | Inner core Dv50 (μm) | Preprocessing | PVDF weight (g) | Lithium compound weight (g) | Pretreatment weight (g) | Second-step sintering temperature (°C) | |
| Example 1 | Elemental silicon | 1.5 | Air, 300°C, 1h | 1 | Lithium carbonate 1.21 | 150 | 900 | 1.7 |
| Example 2 | Elemental silicon | 1.5 | Air, 300°C, 1h | 3 | Lithium carbonate 3.64 | 150 | 900 | 1.7 |
| Example 3 | Elemental silicon | 1.5 | Air, 300°C, 1h | 5 | Lithium carbonate 6.06 | 150 | 900 | 1.7 |
| Example 4 | Elemental silicon | 1.5 | Air, 300°C, 1h | 7 | Lithium carbonate 8.49 | 150 | 900 | 1.7 |
| Example 5 | Elemental silicon | 1.5 | Air, 300°C, 1h | 10 | Lithium carbonate 12.12 | 150 | 900 | 1.7 |
| Example 6 | Elemental silicon | 0.9 | Air, 300°C, 1h | 5 | Lithium carbonate 6.06 | 150 | 900 | 1.1 |
| Example 7 | Elemental silicon | 1.1 | Air, 300°C, 1h | 5 | Lithium carbonate 6.06 | 150 | 900 | 1.3 |
| Example 8 | Elemental silicon | 1.9 | Air, 300°C, 1h | 5 | Lithium carbonate 6.06 | 150 | 900 | 2.1 |
| Example 9 | Elemental silicon | 2.6 | Air, 300°C, 1h | 5 | Lithium carbonate 6.06 | 150 | 900 | 3 |
| Example 10 | Ferrosilicon alloy | 1.5 | Air, 300°C, 1h | 5 | Lithium carbonate 6.06 | 150 | 900 | 1.7 |
| Example 11 | Elemental silicon | 1.5 | Air, 300°C, 1h | 5 | Lithium carbonate 9.09 | 150 | 900 | 1.7 |
| Example 12 | Elemental silicon | 1.5 | Air, 300°C, 1h | 5 | Lithium carbonate 0.87 | 150 | 900 | 1.7 |
| Example 13 | Elemental silicon | 1.5 | Air, 300°C, 1h | 5 | Lithium hydroxide 3.93 | 150 | 900 | 1.7 |

(continued)

| | Step (1) | | | Step (2) | | | | Negative electrode active material Dv50 (μm) |
|---|---|---|---|---|---|---|---|---|
| | Inner core | Inner core Dv50 (μm) | Preprocessing | PVDF weight (g) | Lithium compound weight (g) | Pretreatment weight (g) | Second-step sintering temperature (°C) | |
| Comparative example 1 | Elemental silicon | 1.5 | Air, 300°C, 1h | - | - | - | 900 | 1.5 |
| Comparative example 2 | Elemental silicon | 1.5 | - | 5 | Lithium carbonate 6.06 | Elemental silicon 150 | 900 | 1.7 |
| Comparative example 3 | Elemental silicon | 1.5 | Air, 300°C, 1h | 13 | Lithium carbonate 15.76 | 150 | 900 | 1.7 |
| Comparative example 4 | Elemental silicon | 0.5 | Air, 300°C, 1h | 5 | Lithium carbonate 6.06 | 150 | 900 | 0.7 |
| Comparative example 5 | Elemental silicon | 3.6 | Air, 300°C, 1h | 5 | Lithium carbonate 6.06 | 150 | 900 | 4 |
| Comparative example 6 | $SiO_x$ (x is 0.5 to 1.6) particle* | 1.5 | - | 5 | Lithium carbonate 6.06 | $SiO_x$ particle 150 | 900 | 1.7 |
| Comparative example 7 | Elemental silicon | 1.5 | Air, 300°C, 1h | 5 | Lithium carbonate 9.81 | 150 | 900 | 1.7 |
| Comparative example 8 | Elemental silicon | 1.5 | Air, 300°C, 1h | 5 | Lithium carbonate 0.69 | 150 | 900 | 1.7 |
| Comparative example 9 | Porous silicon | 1.5 | Air, 300°C, 1h | 5 | Lithium carbonate 6.06 | 150 | 900 | 1.7 |

*Metal silicon powder and silicon dioxide powder were mixed in a molar ratio of 0.8 to 1.3, the mixture was put in a reaction furnace for gasification at a vacuum level of 10Pa and took out after a furnace temperature drops below 100°C, and was ground, by a ball mill to obtain $SiO_x$ (x is 0.5 to 1.6) with a $D_v50$ of 1.5 μm.

Button battery production

The negative electrode active materials in Examples 1 to 13 and Comparative examples 1 to 9 were used to prepare a negative electrode plate. The negative electrode active materials, a conductive agent acetylene black, a conductive agent CNT (carbon nanotube, Carbon Nano Tube), and a binder polyacrylic acid were dissolved in deionized water in a weight ratio of 60:19:1:20, and were stirred evenly to make a negative electrode slurry. The negative electrode slurry was evenly applied on a negative electrode current collector copper foil with a coating amount of 2 $mg/cm^2$. Then, the copper foil coated with the slurry was subjected to drying, cold pressing, and slitting, so that a negative electrode plate was obtained.

A metal lithium sheet was used as a counter electrode, and a polyethylene (PE) film was used as a separator.

In an argon atmosphere glove box ($H_2O$<0.1 ppm, $O_2$<0.1 ppm), organic solvents: ethylene carbonate (EC) and ethyl methyl carbonate (EMC) were mixed evenly in a volume ratio of 3/7, into which 15% (which is based on weights of ethylene carbonate and ethyl methyl carbonate) fluoroethylene carbonate (FEC) was added. Then, 12.5% (which is based on the weights of ethylene carbonate and ethyl methyl carbonate) $LiPF_6$ was dissolved in the mixed organic solvent, and even stirring was performed to obtain an electrolyte.

The electrode, separator, electrolyte, and negative electrode plate were assembled into a button battery in the glove box.

Test example 1: Detection of a pretreatment

(1) An attenuated total reflectance-Fourier transform infrared spectroscopy (ATR-FTIR) test was performed on each of surface layers of the pretreatments in Examples 1 and 10, where a spectrogram of the pretreatment of Example 1 is shown in FIG. 7.
The result shown that Si-O-Si chemical bonds and Si-O chemical bonds could be detected on the surface layers of the two pretreatments.
(2) Representation of thickness of the surface layer of the pretreatment: according to JY/T 011-1996 General Rules for transmission electron microscopy, the pretreatment in Example 1 was cut by FIB for morphology and composition analysis. The result showed that thickness of the surface layer of the pretreatment in Example 1 was 3 nm.

Test example 2: Detection of the negative electrode active material

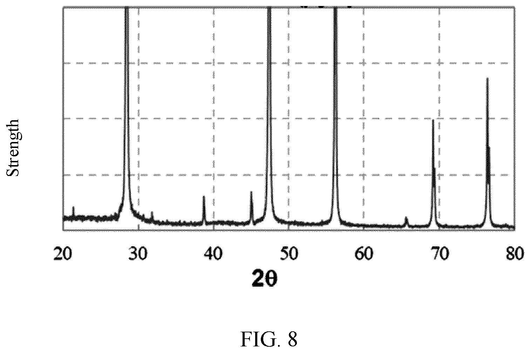

(1) Qualitative analysis of composition of a surface layer of the negative electrode active material:
The Bruker D8 Discover X-ray diffractometer produced by the Bruker AxS Inc, Germany was used to detect surface layers of the negative electrode active materials in Examples 1 to 13. According to JIS K0131-1996 General Rules for X-ray diffraction analysis, the CuK$\alpha$ ray was used as a radiation source, a ray wavelength $\lambda$=1.5406Å, a 2$\theta$ scanning angle range was 20° to 80°, and a scanning speed was 4°/min, to obtain an XRD pattern. According to the pattern, standard powder diffraction data (PDF) for standard substances was used and comparative analysis was performed by using a standard analysis method, and then it was determined that the surface layer of the negative electrode active material contained lithium fluoride and lithium carbonate. The XRD pattern of the surface layer of the negative electrode active material in Example 1 is shown in FIG. 8.
(2) Determination of an element carbon content in the negative electrode active material:
According to the determination method of GB/T 20123-2006/ISO 15350:2000, an HCS-140 infrared carbon and sulfur analyzer produced by Shanghai Dekai Instrument Co., Ltd. was used to determine an element carbon content in each of the negative electrode active materials in Examples 1 to 13 and Comparative examples 2 to 9 with detection precision conforming to verification regulations of the JJG 395-1997 standard.
(3) Determination of $Li_2CO_3$ and LiOH contents in the negative electrode active material:

A $Li_2CO_3$ content in each of the negative electrode active materials in Examples 1 to 12 and Comparative examples 2 to 9 was determined, and a $Li_2CO_3$ content and a LiOH content in the negative electrode active material in Example 13 was determined.
A specific method was as follows: 30 g of negative electrode active material was weighed for stirring the material with 100 g of deionized water; they were left standing for filtration and then the filtrate was collected; potentiometric titration was performed on the filtrate by using a 905 Ttrando potentiometric titrator (according to GB/T 9725-2007 Chemical reagent-General Rules for potentiometric titration); a composite pH electrode was used and a titrant was a 0.5 mol/L HCL solution, so that a $CO_3^{2-}$ content and an $OH^-$ content in the filtrate were determined; and conversion was performed based on a stoichiometric ratio of $Li_2CO_3$ and LiOH, so that a $Li_2CO_3$ content and a LiOH content in the negative electrode active material were obtained.

(4) Determination of an element lithium content in the negative electrode active material:

An element lithium content in each of the negative electrode active materials in Examples 1 to 13 and Comparative examples 2 to 9 was determined.

A specific method was as follows: With reference to EPA-3052-1996 Microwave Acid Digestion Method for Silicate, 0.5 g of negative electrode active material was digested by microwave by using 10 mL nitric acid with a concentration of 65% and 5 mL hydrofluoric acid with a concentration of 40%. The digested material was added to a 50 mL volumetric flask for constant volume. Then, according to EPA 6010D-2014 Inductively coupled plasma atomic emission spectrometry, an element lithium content in the volumetric flask was determined by using an ICAP-7000 Inductively Coupled Plasma Optical Emission Spectrometry (ICP-OES) produced by Thermo Fisher Scientific (Thermo Fisher Scientific) Inc., USA, so that an element lithium content in the negative electrode active material was calculated and a ratio of an element lithium content to an element carbon content was calculated.

(5) Calculation of a lithium fluoride content in the negative electrode active material:

The lithium fluoride content in each of the negative electrode active materials in Examples 1 to 12 and Comparative examples 2 to 9 was calculated according to the following formula:

Lithium fluoride content (mass proportion) in the negative electrode active material=[element lithium content (mass proportion%) in the negative electrode active material/6.941-2×lithium carbonate content (mass proportion%) in the negative electrode active material/73.89]×25.95

The lithium fluoride content in the negative electrode active material in Example 13 was calculated according to the following formula:

Lithium fluoride content (mass proportion) in the negative electrode active material=[element lithium content (mass proportion%) in the negative electrode active material/6.941-2×lithium carbonate content (mass proportion%) in the negative electrode active material/73.89-lithium hydroxide content in the negative electrode active material (mass proportion%)/23.95]×25.95

(6) Calculation of an element fluorine content in the negative electrode active material:

The element fluorine content in each of the negative electrode active materials in Examples 1 to 13 and Comparative examples 2 to 9 was calculated according to the following formula:

Element fluorine content in the negative electrode active material (mass proportion)=lithium fluoride content in the negative electrode active material (mass proportion)×18.998/25.95

(7) Representation of thickness of the surface layer of the negative electrode active material: According to JY/T 011-1996 General Rules for transmission electron microscopy, the negative electrode active materials in Examples 1 to 13 and Comparative examples 2 to 9 each were cut by FIB for morphology and composition analysis to obtain the thickness of the surface layer of the negative electrode active material.

(8) Determination of a specific surface area in the negative electrode active material:

Referring to GB/T 19587-2017 "Determination of the specific surface area of solids by gas adsorption using the BET method", an analysis test of specific surface area by nitrogen adsorption was performed by using a TriStar II 3020 specific surface and porosity analyzer produced by Micromeritics Instrument Corporation, USA, which calculates specific surface areas of the negative electrode active materials in Examples 1 to 13 and Comparative examples 1 to 9 by using the BET (Brunauer Emmett Teller) method.

(9) Determination of a quantity of pores in a particle of the negative electrode active material:

A quantity of pores in a particle of each of the negative electrode active materials in Examples 1 to 13 and Comparative examples 1 to 9 was determined.

The negative electrode active material was made into a slurry, coated on a current collector, and dried to prepare an electrode plate. The negative electrode plate was cut by using a plasma cutting (Plasma Cutting) technology to obtain a flat section, which was observed under a scanning electron microscope equipped with an energy disperse spectroscopy (EDS, Energy Disperse Spectroscopy) apparatus. Five complete particles with a particle size greater than 800 nm (where a diameter of a circumcircle of a particle profile was the particle size) were randomly selected for analysis. Composition of each particle was analyzed by energy disperse spectroscopy. If an element silicon content in the particle was greater than or equal to 7wt%, the particle was a silicon particle.

A method for measuring pores in each silicon particle was as follows: Only a quantity of pores inside an SEM image were recorded, not counting pores at the edge of the SEM image in the quantity. A diameter of a circumcircle of a pore in the silicon particle was defined as a pore diameter. If a pore diameter was greater than or equal to 50 nm, the pore was counted as one, until all the pores in the particle were completely measured. A quantity of counted pores was a quantity of pores in the particle of the negative electrode active material.

Results provided by the above tests were listed in Table 2.

**Table 2**

| Negative electrode active material | Element fluorine content (% W/W) | Element carbon content (% W/W) | $Li_2CO_3$ content (% W/W) | LiOH content (% W/W) | LiF content (% W/W) | Wight ratio of element lithium to element carbon | Surface layer thickness (nm) | Specific surface area ($m^2/g$) | Quantity of pores in particle |
|---|---|---|---|---|---|---|---|---|---|
| Example 1 | 0.20% | 0.30% | 0.05% | - | 0.27% | 27.49% | 7 | 6.5 | 1 |

| Negative electrode active material | Element fluorine content (% W/W) | Element carbon content (% W/W) | $Li_2CO_3$ content (% W/W) | LiOH content (% W/W) | LiF content (% W/W) | Wight ratio of element lithium to element carbon | Surface layer thickness (nm) | Specific surface area ($m^2/g$) | Quantity of pores in particle |
|---|---|---|---|---|---|---|---|---|---|
| Example 2 | 0.40% | 0.80% | 0.14% | - | 0.55% | 21.55% | 15 | 7.2 | 0 |
| Example 3 | 0.92% | 1.51% | 0.24% | - | 1.26% | 25.24% | 23 | 8.1 | 0 |
| Example 4 | 1.30% | 1.90% | 0.33% | - | 1.77% | 28.26% | 31 | 8.7 | 1 |
| Example 5 | 2.00% | 2.80% | 0.45% | - | 2.73% | 29.11% | 43 | 9.2 | 2 |
| Example 6 | 0.91% | 1.52% | 0.24% | - | 1.24% | 24.84% | 23 | 13.0 | 2 |
| Example 7 | 0.89% | 1.55% | 0.23% | - | 1.22% | 23.76% | 23 | 10.3 | 1 |
| Example 8 | 0.92% | 1.50% | 0.25% | - | 1.26% | 25.54% | 23 | 7.3 | 0 |
| Example 9 | 0.93% | 1.51% | 0.22% | - | 1.27% | 25.24% | 23 | 6.0 | 0 |
| Example 10 | 0.90% | 1.51% | 0.22% | - | 1.23% | 24.51% | 23 | 8.0 | 0 |
| Example 11 | 1.00% | 2.04% | 3.48% | - | 1.37% | 49.96% | 42 | 9.5 | 1 |
| Example 12 | 0.26% | 1.46% | 0.01% | - | 0.35% | 6.63% | 16 | 7.2 | 2 |
| Example 13 | 0.93% | 1.48% | 0.12% | 0.04% | 1.27% | 25.26% | 21 | 8.20 | 0 |
| Comparative example 1 | - | - | - | - | - | - | - | 6.1 | 0 |
| Comparative example 2 | 0.90% | 1.53% | 0.23% | - | 1.23% | 24.31% | 20 | 8 | 2 |
| Comparative example 3 | 2.88% | 3.31% | 0.56% | - | 3.93% | 34.96% | 56 | 10.1 | 0 |
| Comparative example 4 | 0.93% | 1.55% | 0.23% | - | 1.27% | 24.71% | 15 | 16 | 0 |
| Comparative example 5 | 0.91% | 1.51% | 0.23% | - | 1.24% | 24.88% | 25 | 5.2 | 2 |
| Comparative example 6 | 0.90% | 1.51% | 0.22% | - | 1.23% | 24.51% | 20 | 8.1 | 2 |
| Comparative example 7 | 0.92% | 2.14% | 4.60% | - | 1.26% | 56.09% | 47 | 9.1 | 0 |

| Negative electrode active material | Element fluorine content (% W/W) | Element carbon content (% W/W) | $Li_2CO_3$ content (% W/W) | LiOH content (% W/W) | LiF content (% W/W) | Wight ratio of element lithium to element carbon | Surface layer thickness (nm) | Specific surface area ($m^2/g$) | Quantity of pores in particle |
|---|---|---|---|---|---|---|---|---|---|
| Comparative example 8 | 0.21% | 1.48% | 0.01% | - | 0.29% | 5.31% | 15 | 7 | 0 |
| Comparative example 9 | 0.97% | 1.56% | 0.24% | - | 1.32% | 25.61% | 21 | 9.2 | 20 |

It can be learned from Table 2 that the weight ratio of element lithium to element carbon in the negative electrode active material of this application was 6.63% to 49.96%, an element fluorine content by weight was 0.2% to 2%, an element carbon content by weight was 0.3% to 2.8%, the specific surface area was 6 $m^2/g$ to 13 $m^2/g$, and the quantity of pores in the particle was 0 to 2. Compared with the comparative example, the negative electrode active material provided in this application had better electrolyte wettability, a lower volume expansion rate, and fewer side reactions. Further, a cell prepared from the negative electrode active material had higher energy density.

Test example 3

(1) Gram capacity of the negative electrode active materials in Examples 1 to 13 and Comparative examples 1 to 9 were determined; the negative electrode active materials in Examples 1 to 13 and Comparative examples 1 to 9 were used to produce a button battery according to the above-mentioned method; and first-cycle coulombic efficiency and a cycling capacity retention rate of the button battery were determined.

A specific method was as follows:
In an environment of 25°C and normal pressure, the button battery was discharged to a voltage of 0.005 V at a constant current rate of 0.1C, then discharged to a voltage of 0.005 V at a constant current rate of 0.04C, and left standing for 10 minutes. A discharge capacity at this time was recorded, that was, first-cycle lithiation capacity. Then, the button battery was charged to a voltage of 1.5 V at a constant current rate of 0.1C and left standing for 10 minutes. This was a cyclic charge and discharge process. A charge capacity at this time was recorded, that is, first-cycle delithiation capacity. The button battery was subjected to 50 cycles of charge and discharge tests according to the method, and a delithiation capacity of each cycle was recorded.

The delithiation capacity of the first circle was the gram capacity of the negative electrode active material.

The first-cycle coulombic efficiency (%) of the button battery=100%×first-cycle delithiation capacity/first-cycle lithiation capacity.

The cycling capacity retention rate (%) of the button battery=100%×50th-cycle of delithiation capacity/first-cycle delithiation capacity.

The above-mentioned results are shown in Table 3.

Table 3

| Sample | Gram capacity (mAh/g) | First-cycle coulombic efficiency | Cycling capacity retention rate |
|---|---|---|---|
| Example 1 | 2677 | 80.1% | 79% |
| Example 2 | 2701 | 83.5% | 86.20% |
| Example 3 | 2806 | 85.0% | 92.3% |
| Example 4 | 2659 | 82.6% | 90.50% |
| Example 5 | 2373 | 79.7% | 85.40% |
| Example 6 | 2648 | 79.5% | 80% |
| Example 7 | 2787 | 83.9% | 88.10% |
| Example 8 | 2774 | 84.0% | 89.20% |
| Example 9 | 2665 | 80.2% | 83.40% |
| Example 10 | 1939 | 86.10% | 92.5% |
| Example 11 | 2404 | 80.10% | 82.4% |
| Example 12 | 2505 | 81.30% | 83.8% |
| Example 13 | 2797 | 84.7% | 91.9% |
| Comparative example 1 | 1677 | 57.3% | 26.7% |
| Comparative example 2 | 2371 | 66.9% | 58.3% |
| Comparative example 3 | 1795 | 70.2% | 61.1% |
| Comparative example 4 | 1606 | 50.0% | 55.8% |
| Comparative example 5 | 1134 | 35.2% | 44.5% |
| Comparative example 6 | 1477 | 71% | 75.0% |
| Comparative example 7 | 2023 | 71.50% | 66.7% |
| Comparative example 8 | 2109 | 72.3% | 73.7% |
| Comparative example 9 | 1933 | 61.2% | 62.3% |

It can be learned from Table 3 that, compared with the comparative examples, the negative electrode active materials provided in the embodiments of this application had larger gram capacity, and better conductivity. Further, a battery prepared from the negative electrode active materials had higher first-cycle coulombic efficiency and a higher cycling capacity retention rate.

It should be noted that this application is not limited to the foregoing embodiments. The invention is defined by the appended claims.

## Claims

1. A modified silicon material with a core-shell structure, comprising an inner core, a first coating layer that wraps the inner core, and a second coating layer that wraps the first coating layer, wherein the inner core is elemental silicon and/or a silicon alloy; the first coating layer comprises a silicon-oxygen compound; the second coating layer comprises lithium fluoride, lithium carbonate, and carbon; and a weight ratio of element lithium to element carbon in the modified silicon material is 6% to 52%, and optionally, 6.5% to 50%,

   wherein a particle size $D_v50$ of the modified silicon material is 1 μm to 3.5 μm;
   wherein the modified silicon material contains 0.1% to 3% element fluorine by weight;
   wherein the modified silicon material contains 0.2% to 3% element carbon by weight;
   wherein a quantity of pores in a single particle of the modified silicon material is less than 10, and said pore diameter of the pore is not less than 50 nm,
   wherein the particle size Dv50 and the quantity of pores are measured according to the description.

2. The modified silicon material according to claim 1, wherein the second coating layer further comprises lithium hydroxide.

3. The modified silicon material according to claim 1 or 2, wherein the silicon-oxygen compound is $SiO_x$, wherein $0<x<2$, and optionally, $0.3\leq x\leq 1.5$.

4. The modified silicon material according to any one of claims 1 to 3, wherein the second coating layer contains:

0.1% to 2.9% lithium fluoride;
0.005% to 3.8% lithium carbonate;
0.15% to 3% carbon; and
0% to 0.07% lithium hydroxide.

5. The modified silicon material according to any one of claims 1 to 4, wherein a particle size $D_v50$ of the modified silicon material is 1.1 μm to 3 μm.

6. The modified silicon material according to any one of claims 1 to 5, wherein a specific surface area of the modified silicon material is 5.5 $m^2/g$ to 14 $m^2/g$, and optionally, 6 $m^2/g$ to 13 $m^2/g$.

7. The modified silicon material according to any one of claims 1 to 6, wherein the modified silicon material contains 0.2% to 2% element fluorine by weight;
and/or

wherein the modified silicon material contains 0.3% to 2.8% element carbon by weight;
and/or
wherein the silicon alloy is selected from at least one of a ferrosilicon alloy, a silicon aluminum alloy, a silicon manganese alloy, a silicon tin alloy, and a silicon germanium alloy;
and/or
wherein thickness of the first coating layer is 1 nm to 8 nm;
and/or
wherein thickness of the second coating layer is 5 nm to 45 nm.

8. A method for preparing a modified silicon material according to any of the claims 1-7, comprising the following steps:

(1) heat-treating an inner core in an oxygen-containing atmosphere to obtain a pretreatment, wherein the inner core is elemental silicon and/or a silicon alloy;
(2) mixing the pretreatment, PVDF, a lithium-containing compound, and a solvent, wherein the lithium-containing compound is lithium carbonate and/or lithium hydroxide; and
(3) subjecting the mixture to drying, roasting, cooling, crushing, and sieving in sequence to obtain a modified silicon material.

9. The method according to claim 8, wherein in step (1), the heat treating is performed at 200°C to 400°C for 0.5 to 3 hours;
and/or

wherein in step (3), the roasting is performed in an inert atmosphere at a temperature of 800°C to 1000°C, and optionally, for a duration of 3 to 5 hours;
and/or
wherein in step (3), the dried material is preheated at 300°C to 500°C for 1 to 2 hours before the roasting;
and/or
wherein in step (2), a weight ratio of the PVDF, the lithium-containing compound, and the pretreatment is 1:(0.1-2):(13-155).

10. A negative electrode active material, which is the modified silicon material according to any one of claims 1 to 7 or a modified silicon material prepared by using the method according to any one of claims 8 to 9.

11. A negative electrode plate comprising the negative electrode active material according to claim 10.

**12.** A secondary battery (5) comprising the negative electrode plate according to claim 11.

**13.** A battery module (4) comprising the secondary battery (5) according to claim 12.

**14.** A battery pack (1) comprising the battery module (4) according to claim 13.

**15.** An electric apparatus comprising at least one of the secondary battery (5) according to claim 12, the battery module (4) according to claim 13, or the battery pack (1) according to claim 14.

## Patentansprüche

**1.** Modifiziertes Siliciummaterial mit einer Kern-Mantel-Struktur, umfassend einen inneren Kern, eine erste Beschichtungsschicht, womit der innere Kern umwickelt ist, und eine zweite Beschichtungsschicht, womit die erste Beschichtungsschicht umwickelt ist, wobei der innere Kern elementares Silicium und/oder eine Siliciumlegierung ist; die erste Beschichtungsschicht eine Silicium-Sauerstoff-Verbindung umfasst; die zweite Beschichtungsschicht Lithiumfluorid, Lithiumcarbonat und Kohlenstoff umfasst; und ein Gewichtsverhältnis des Elements Lithium zu dem Element Kohlenstoff in dem modifizierten Siliciummaterial 6 % bis 52 % und gegebenenfalls 6,5 % bis 50 % beträgt,

wobei eine Partikelgröße $D_v50$ des modifizierten Siliciummaterials 1 μm bis 3,5 μm beträgt;
wobei das modifizierte Siliciummaterial 0,1 Gew.-% bis 3 Gew.-% des Elements Fluor enthält;
wobei das modifizierte Siliciummaterial 0,2 Gew.-% bis 3 Gew.-% des Elements Kohlenstoff enthält;
wobei eine Menge der Poren in einem einzelnen Partikel des modifizierten Siliciummaterials kleiner als 10 ist, und der Porendurchmesser der Pore nicht kleiner als 50 nm ist,
wobei die Partikelgröße $D_v50$ und die Menge der Poren gemäß den technischen Angaben gemessen werden.

**2.** Modifiziertes Siliciummaterial nach Anspruch 1, wobei die zweite Beschichtungsschicht des Weiteren Lithiumhydroxid umfasst.

**3.** Modifiziertes Siliciummaterial nach Anspruch 1 oder 2, wobei die Silicium-SauerstoffVerbindung $SiO_x$ ist, wobei $0 < x < 2$ und gegebenenfalls $0,3 \leq x \leq 1,5$ ist.

**4.** Modifiziertes Siliciummaterial nach einem der Ansprüche 1 bis 3, wobei die zweite Beschichtungsschicht folgendes enthält:

0,1 % bis 2,9 % Lithiumfluorid;
0,005 % bis 3,8 % Lithiumcarbonat;
0,15 % bis 3 % Kohlenstoff; und
0 % bis 0,07 % Lithiumhydroxid.

**5.** Modifiziertes Siliciummaterial nach einem der Ansprüche 1 bis 4, wobei eine Partikelgröße $D_v50$ des modifizierten Siliciummaterials 1,1 μm bis 3 μm beträgt.

**6.** Modifiziertes Siliciummaterial nach einem der Ansprüche 1 bis 5, wobei eine spezifische Oberfläche des modifizierten Siliciummaterials 5,5 $m^2/g$ bis 14 $m^2/g$ und gegebenenfalls 6 $m^2/g$ bis 13 $m^2/g$ beträgt.

**7.** Modifiziertes Siliciummaterial nach einem der Ansprüche 1 bis 6, wobei das modifizierte Siliciummaterial 0,2 Gew.-% bis 2 Gew.-% des Elements Fluor enthält;
und/oder

wobei das modifizierte Siliciummaterial 0,3 Gew.-% bis 2,8 Gew.-% des Elements Kohlenstoff enthält; und/oder
wobei die Siliciumlegierung ausgewählt ist aus mindestens einer von einer Ferrosiliciumlegierung, einer Siliciumaluminiumlegierung, einer Siliciummanganlegierung, einer Siliciumzinnlegierung und einer Siliciumgermaniumlegierung;
und/oder
wobei die Dicke der ersten Beschichtungsschicht 1 nm bis 8 nm beträgt; und/oder
wobei die Dicke der zweiten Beschichtungsschicht 5 nm bis 45 nm beträgt.

**8.** Verfahren zur Herstellung eines modifizierten Siliciummaterials nach einem der Ansprüche 1 bis 7, umfassend die folgenden Schritte:

(1) Wärmebehandeln eines inneren Kerns in einer sauerstoffhaltigen Atmosphäre, um eine Vorbehandlung zu erhalten, wobei der innere Kern elementares Silicium und/oder eine Siliciumlegierung ist;
(2) Mischen der Vorbehandlung, PVDF, einer lithiumhaltigen Verbindung und eines Lösungsmittels, wobei die lithiumhaltige Verbindung Lithiumcarbonat und/oder Lithiumhydroxid ist; und
(3) nacheinander Unterziehen der Mischung Trocknen, Rösten, Kühlen, Zerkleinern und Sieben, um ein modifiziertes Siliciummaterial zu erhalten.

**9.** Verfahren nach Anspruch 8, wobei in Schritt (1) die Wärmebehandlung bei 200 °C bis 400 °C für 0,5 bis 3 Stunden durchgeführt wird;
und/oder

wobei in Schritt (3) das Rösten in einer inerten Atmosphäre bei einer Temperatur von 800 °C bis 1000 °C und gegebenenfalls für eine Dauer von 3 bis 5 Stunden durchgeführt wird;
und/oder
wobei in Schritt (3) das getrocknete Material vor dem Rösten 1 bis 2 Stunden auf 300 °C bis 500 °C vorgewärmt wird;
und/oder
wobei in Schritt (2) ein Gewichtsverhältnis des PVDF, der lithiumhaltigen Verbindung und der Vorbehandlung 1:(0,1-2):(13-155) beträgt.

**10.** Negativelektroden-Aktivmaterial, welches das modifizierte Siliciummaterial nach einem der Ansprüche 1 bis 7 oder ein modifiziertes Siliciummaterial ist, welches unter Verwendung des Verfahrens nach einem der Ansprüche 8 bis 9 hergestellt worden ist.

**11.** Negativelektrodenplatte, umfassend das Negativelektroden-Aktivmaterial nach Anspruch 10.

**12.** Sekundärbatterie (5), umfassend die Negativelektrodenplatte nach Anspruch 11.

**13.** Batteriemodul (4), umfassend die Sekundärbatterie (5) nach Anspruch 12.

**14.** Batteriepack (1), umfassend das Batteriemodul (4) nach Anspruch 13.

**15.** Elektrisches Gerät, umfassend mindestens eines von der Sekundärbatterie (5) nach Anspruch 12, dem Batteriemodul (4) nach Anspruch 13 oder dem Batteriepack (1) nach Anspruch 14.

## Revendications

**1.** Matériau au silicium modifié avec une structure cœur-coquille, comprenant un cœur interne, une première couche de revêtement qui enveloppe le cœur interne, et une deuxième couche de revêtement qui enveloppe la première couche de revêtement, le cœur interne étant du silicium élémentaire et/ou un alliage de silicium ; la première couche de revêtement comprenant un composé silicium-oxygène ; la deuxième couche de revêtement comprenant du fluorure de lithium, du carbonate de lithium et du carbone ; et un rapport pondéral entre lithium élémentaire et carbone élémentaire dans le matériau au silicium modifié étant de 6 % à 52 %, et éventuellement de 6,5 % à 50 %,

une taille de particules $D_v50$ du matériau au silicium modifié étant de 1 $\mu$m à 3,5 $\mu$m ;
le matériau au silicium modifié contenant 0,1 % à 3 % de fluor élémentaire en poids ;
le matériau au silicium modifié contenant 0,2 % à 3 % de carbone élémentaire en poids ;
une quantité de pores dans une seule particule du matériau au silicium modifié étant inférieure à 10, et ledit diamètre de pore du pore n’étant pas inférieur à 50 nm,
la taille de particules $D_v50$ et la quantité de pores étant mesurées conformément à la description.

**2.** Matériau au silicium modifié selon la revendication 1, dans lequel la deuxième couche de revêtement comprend en outre de l’hydroxyde de lithium.

3. Matériau au silicium modifié selon la revendication 1 ou 2, dans lequel le composé silicium-oxygène est $SiO_x$, où $0 < x < 2$, et éventuellement $0,3 \leq x \leq 1,5$.

4. Matériau au silicium modifié selon l'une quelconque des revendications 1 à 3, dans lequel la deuxième couche de revêtement contient :

   0,1 % à 2,9 % de fluorure de lithium ;
   0,005 % à 3,8 % de carbonate de lithium ;
   0,15 % à 3 % de carbone ; et
   0 % à 0,07 % d'hydroxyde de lithium.

5. Matériau au silicium modifié selon l'une quelconque des revendications 1 à 4, une taille de particules $D_v50$ du matériau au silicium modifié étant de 1,1 μm à 3 μm.

6. Matériau au silicium modifié selon l'une quelconque des revendications 1 à 5, une surface spécifique du matériau au silicium modifié étant de 5,5 $m^2$/g à 14 $m^2$/g, et éventuellement de 6 $m^2$/g à 13 $m^2$/g.

7. Matériau au silicium modifié selon l'une quelconque des revendications 1 à 6, le matériau au silicium modifié contenant 0,2 % à 2 % de fluor élémentaire en poids ;
   et/ou

   le matériau au silicium modifié contenant 0,3 % à 2,8 % de carbone élémentaire en poids ;
   et/ou
   l'alliage de silicium étant au moins un composé choisi parmi un alliage de ferrosilicium, un alliage de silicium et d'aluminium, un alliage de silicium et de manganèse, un alliage de silicium et d'étain, et un alliage de silicium et de germanium ;
   et/ou
   l'épaisseur de la première couche de revêtement étant de 1 nm à 8 nm ;
   et/ou
   l'épaisseur de la deuxième couche de revêtement étant de 5 nm à 45 nm.

8. Procédé destiné à préparer un matériau au silicium modifié selon l'une quelconque des revendications 1 à 7, comprenant les étapes suivantes :

   (1) traitement thermique d'un cœur interne dans une atmosphère contenant de l'oxygène pour obtenir un prétraitement, le cœur interne étant du silicium élémentaire et/ou un alliage de silicium ;
   (2) mélange du prétraitement, de PVDF, d'un composé contenant du lithium et d'un solvant, le composé contenant du lithium étant le carbonate de lithium et/ou l'hydroxyde de lithium ; et
   (3) soumission du mélange à un séchage, un grillage, un refroidissement, un broyage et un tamisage à la suite pour obtenir un matériau au silicium modifié.

9. Procédé selon la revendication 8 dans lequel, à l'étape (1), le traitement thermique est effectué à 200 °C à 400 °C pendant 0,5 à 3 heures ;
   et/ou

   dans lequel, à l'étape (3), le grillage est effectué dans une atmosphère inerte à une température de 800 °C à 1000 °C, et éventuellement pendant une durée de 3 à 5 heures ;
   et/ou
   dans lequel, à l'étape (3), le matériau séché est préchauffé à 300 °C à 500 °C pendant 1 à 2 heures avant le grillage ;
   et/ou
   dans lequel, à l'étape (2), un rapport pondéral entre le PVDF, le composé contenant du lithium et le solvant est de 1:(0,1-2):(13-155).

10. Matériau actif d'électrode négative, qui est le matériau au silicium modifié selon l'une quelconque des revendications 1 à 7 ou un matériau au silicium modifié préparé au moyen du procédé selon l'une quelconque des revendications 8 et 9.

**11.** Plaque d'électrode négative comprenant le matériau actif d'électrode négative selon la revendication 10.

**12.** Batterie rechargeable (5) comprenant la plaque d'électrode négative selon la revendication 11.

**13.** Module de batterie (4) comprenant la batterie rechargeable (5) selon la revendication 12.

**14.** Bloc-batterie (1) comprenant le module de batterie (4) selon la revendication 13.

**15.** Appareil électrique comprenant au moins un élément parmi la batterie rechargeable (5) selon la revendication 12, le module de batterie (4) selon la revendication 13, et le bloc-batterie (1) selon la revendication 14.

5

FIG. 1

5
53
52
52
51

FIG. 2

1

4
5
5
5

FIG. 3

1

FIG. 4

1
2
4
4
4
4
4
4
3

FIG. 5

FIG. 6

110
100
90
80
70
60
50
40
Transmittance (%)
3500
2500
1500
500
Wave number (cm-1)

FIG. 7

Strength
20
30
40
50
60
70
80
2θ

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 109671943 A


### Non-patent literature cited in the description


- Particle Size Analysis-Laser Diffraction Method. *GB/T 19077-2016*
- *GB/T 20123-2006/ISO 15350*, 2000
- Chemical reagent-General Rules for potentiometric titration. *GB/T 9725-2007*
- Determination of the specific surface area of solids by gas adsorption using the BET method. *GB/T 19587-2017*